# FASCICULE DE BREVET EUROPEEN

(11) **EP 3 374 419 B1**
(45) Date de publication et mention de la délivrance du brevet: **09.10.2019**
(21) Numéro de dépôt: 16819592.3
(22) Date de dépôt: 09.11.2016
(51) Int. Cl.: C08J 7/12

(54) **PROCÉDÉ DE TRAITEMENT D'UN ÉLÉMENT DE CONDITIONNEMENT EN ÉLASTOMÈRE, ET ÉLÉMENT DE CONDITIONNEMENT AINSI TRAITÉ**
VERFAHREN ZUR BEHANDLUNG EINES ELASTOMERVERPACKUNGSELEMENTS UND DAMIT BEHANDELTES VERPACKUNGSELEMENT
METHOD FOR TREATING AN ELASTOMER PACKAGING ELEMENT, AND PACKAGING ELEMENT THUS TREATED

(30) Priorité: 12.11.2015 FR 1560792
(43) Date de publication de la demande: 19.09.2018
(73) Titulaire: Aptar Stelmi SAS, 93420 Villepinte (FR)
(72) Inventeur: FOURNIER, Ghislain, 17000 La Rochelle (FR); CABURET, Laurent, 92250 La Garenne-Colombes (FR)
(74) Mandataire: CAPRI
(86) Numéro de dépôt international: PCT/FR2016/052910
(87) Numéro de publication internationale: WO 2017/081409

(56) Documents cités:
- EP-A1- 0 133 832
- WO-A1-96/34926
- WO-A2-2009/030763
- US-A- 4 316 941
- US-A- 6 123 991

## Description

La présente invention concerne un procédé de traitement d'un élément de conditionnement en élastomère, notamment d'un bouchon destiné à un usage médical ou pharmaceutique, ainsi qu'un élément de conditionnement ainsi traité.

Les éléments de conditionnement en élastomère, tels que les bouchons en caoutchouc, notamment ceux destinés aux récipients de médicaments injectables, présentent le risque de laisser migrer vers le médicament des substances extractibles du caoutchouc : résidus de polymérisation, antioxydants, agents de réticulation, ions issus des charges minérales, etc. La qualité des matières premières disponibles, ainsi que la chimie de vulcanisation des caoutchoucs ne permettent pas de réduire correctement ce niveau de substances extractibles.

Afin de limiter voire supprimer ce phénomène, une solution consiste à interposer entre la surface du caoutchouc en contact avec l'intérieur du récipient et le médicament un film de polymère inerte, en général un polymère fluoré, de type PTFE (polytétrafluoroéthylène), ETFE (éthylène tétrafluoroéthylène), ECTFE (éthylène chlorotrifluoroéthylène), FEP (éthylène propylène fluoré), etc. Cette solution a en outre l'intérêt de conférer à la partie de bouchon ainsi revêtue de film des propriétés anti-adhérentes et glissantes, permettant au bouchon une insertion aisée dans le col du récipient, ainsi qu'un glissement approprié des bouchons sur les lignes de conditionnement, notamment sur les bols et rails vibrants.

En revanche, la partie du bouchon non revêtue de film, notamment la partie supérieure appelée "plateau", n'est pas revêtue de film fluoré anti-adhérent. Cela conduit alors à un risque de collage des pièces entre elles lors du stockage, et un glissement insuffisant lors du convoyage sur les lignes de conditionnement.

Il est d'usage de parer à cet inconvénient en enduisant les pièces en caoutchouc d'huile de silicone, soit avec une huile pure, soit avec une émulsion de silicone. Dans ce cas, la totalité de la pièce est in fine recouverte d'une fine couche d'huile de silicone, jouant le rôle de lubrifiant. Cette présence de silicone, notamment sur la partie du bouchon en contact avec le médicament injectable, peut engendrer des problèmes de compatibilité avec certains médicaments, par exemple des protéines.

Une solution alternative a été de traiter ces bouchons en caoutchouc à film barrière par un dépôt polymérisé d'un monomère injecté dans un plasma froid sous vide. Un procédé de ce type est décrit dans le document WO9634926. Il permet de traiter la surface externe de la pièce en caoutchouc d'un revêtement anti-adhérent, et remplace donc l'huile de silicone. Cependant, cette technologie a deux inconvénients :
- la réaction a lieu dans une enceinte sous vide, ce qui nécessite une installation spécifique avec un volume utile restreint ainsi que des matériaux et un système de pompage onéreux; de plus la productivité d'un tel procédé est limitée, car il est nécessaire de recréer le vide dans l'enceinte de traitement après chaque déchargement/chargement des pièces à traiter;
- de la même façon qu'avec enduction d'huile de silicone, la totalité de la surface du bouchon va être traitée, ce qui conduit donc à déposer également sur le film barrière un dépôt de polymère anti-adhérent supplémentaire inutile; de plus, étant déposé sur un film de polymère fluoré anti-adhérent, ce second dépôt n'aura pas une accroche suffisante sur le substrat et risque de se décoller du film fluoré, et ainsi créer des particules qui pourront polluer le médicament injectable.

Une idée par conséquent a été de laisser la partie du bouchon revêtue de film sans autre traitement ou matériau supplémentaire, puisque le polymère remplit les fonctions de barrière et de glissement suffisantes, et de traiter de façon indépendante la partie du bouchon non revêtue de film.

Il était donc souhaitable de mettre en oeuvre une technologie qui :
- laisserait intact le film de polymère fluoré sur la partie du bouchon dirigée vers l'intérieur du récipient; et
- permettrait de traiter sélectivement la partie du bouchon en caoutchouc non revêtue de film fluoré.

Une solution pour ce faire est décrite dans les documents EP0556510 et EP0296878, qui prévoient de pulvériser sur la partie supérieure ou plateau du bouchon une couche de revêtement polymérisé anti-adhérent et glissant. Cela permet d'obtenir les performances souhaitées d'anti-adhérence et de glissement. Cependant, cette technologie a aussi des inconvénients, et notamment :
- il faut faire appel à des polymères dispersés dans des solvants organiques, qui sont évaporés lors du dépôt; cela constitue un risque environnemental, ainsi qu'un risque sécurité car ces solvants sont inflammables et toxiques; leur gestion est en outre couteuse en énergie (élimination ou recyclage) et en raison des précautions à respecter; une partie de ces solvants est de plus potentiellement adsorbée par le caoutchouc, ce qui peut ensuite engendrer la migration de ces solvants vers le médicament conditionné avec le bouchon;
- il est nécessaire d'utiliser des additifs de type agents de réticulation ou agents d'accrochage sur le substrat caoutchouc; ces produits présentent une certaine toxicité, et présentent également un risque de migration vers le médicament.

Les documents US4316941, US6123991, EP0133832 et WO2009030763 décrivent des dispositifs et procédés de l'art antérieur.

La présente invention a pour but de fournir un procédé de traitement d'un élément de conditionnement en élastomère qui ne reproduit pas les inconvénients susmentionnés.

La présente invention a aussi pour but de fournir un procédé de traitement d'un élément de conditionnement en élastomère qui ne présente aucun risque pour le produit fluide destiné à entrer en contact avec ledit élément de conditionnement.

La présente invention a également pour but de fournir un procédé de traitement d'un élément de conditionnement en élastomère qui optimise les performances du bouchon, tant lors de sa fabrication que pendant son utilisation.

La présente invention a également pour but de fournir un procédé de traitement d'un élément de conditionnement en élastomère qui est simple et peu coûteux à mettre en oeuvre, et un tel élément de conditionnement qui est simple et peu coûteux à fabriquer et à assembler.

La présente invention a également pour but de fournir un élément de conditionnement en élastomère, notamment d'un bouchon destiné à un usage médical ou pharmaceutique, traité avec le procédé ci-dessus.

La présente a donc pour objet un procédé de traitement d'un élément de conditionnement en élastomère, notamment d'un bouchon destiné à un usage médical ou pharmaceutique, tel que décrit dans la revendication 1 ou la revendication 2. Des modes de réalisation avantageuses sont décrits dans les revendications dépendantes.

Ces caractéristiques et avantages et d'autres apparaîtront plus clairement au cours de la description détaillée suivante, faite en référence aux dessins joints, donnés à titre d'exemples non limitatifs, et sur lesquels
- la figure 1 est une vue schématique d'un exemple de bouchon auquel peut s'appliquer le procédé de traitement de l'invention,
- les figures 2 et 3 sont des vues schématiques du bouchon de la figure 1, respectivement avant et après insertion dans le col d'un récipient, et
- les figures 4 et 5 sont des schémas de principe des étapes d'activation et de dépôt d'un procédé de traitement selon un mode de réalisation avantageux de la présente invention.

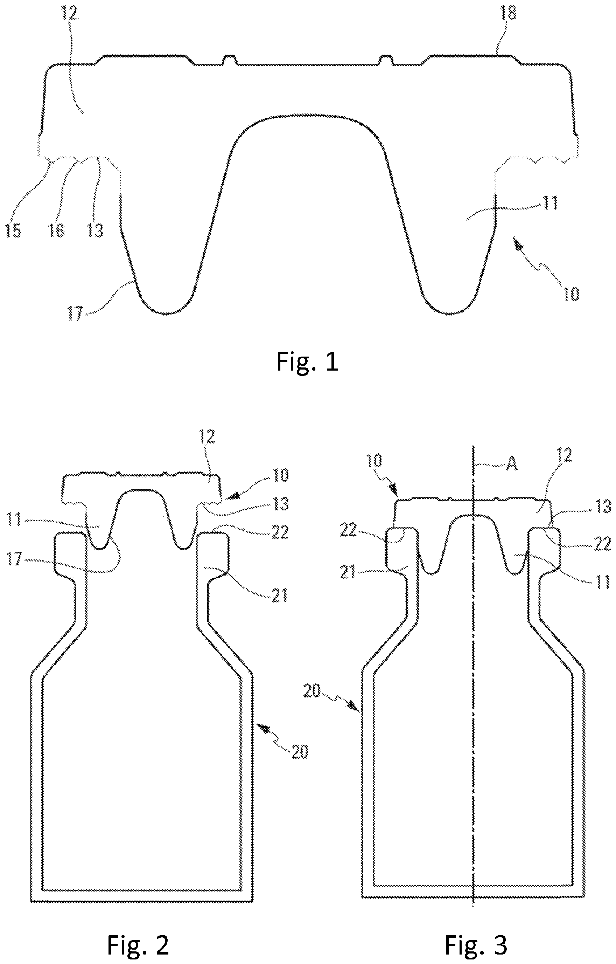

Dans la description, les termes "supérieur" et "inférieur" se réfèrent à la position du bouchon représentée sur les figures, et les termes "axial" et "radial" se réfèrent à l'axe A de la figure 3.

L'invention s'applique plus particulièrement à des bouchons pharmaceutiques en caoutchouc, mais elle pourrait aussi s'appliquer à d'autres éléments de conditionnements dans le domaine médical ou pharmaceutique.

La figure 1 représente schématiquement un bouchon 10, comportant une partie inférieure 11, de préférence creuse, et une partie supérieure 12, de préférence pleine. Ce type de bouchon 10 se fixe dans le col 21 d'un récipient 20 par insertion avec frottement de ladite partie interne 11 dans ledit col 21 du récipient 20. Les figures 2 et 3 illustrent l'insertion du bouchon 10 dans le col 21 d'un récipient 20. Il est toutefois entendu que la présente invention pourrait aussi s'appliquer à d'autres types bouchons. De même, le récipient pourrait être réalisé différemment.

La partie externe 12 du bouchon est destinée à coopérer de manière étanche avec une surface radiale supérieure 22 dudit col 21 du récipient 20. Cette surface radiale supérieure 22 du récipient est généralement plane.

La surface radiale inférieure 13 de ladite partie externe 12 du bouchon 10, qui est la surface qui coopère avec ladite surface radiale supérieure 22 dudit col 21 du récipient 20 lorsque ledit bouchon 10 est en position de fermeture, peut comporter au moins un profil saillant 15, 16. Avantageusement, ces profils saillants 15, 16, en position de fermeture dudit bouchon 10, s'écrasent sur ladite surface radiale supérieure 22 dudit col 21 dudit récipient 20, pour améliorer l'étanchéité.

Avantageusement, la partie interne 11 du bouchon 10 comporte un revêtement 17, tel qu'un film de type PTFE (polytétrafluoroéthylène), ETFE (éthylène tétrafluoroéthylène), ECTFE (éthylène chlorotrifluoroéthylène), FEP (éthylène propylène fluoré). Eventuellement, comme visible sur la figure 1, ce revêtement 17 ne s'étend pas jusqu'à surface radiale inférieure 13 de ladite partie externe 12 du bouchon 10, de sorte qu'il reste une petite partie non-revêtue sur la partie interne 11, qui peut contribuer à l'étanchéité lorsque ladite partie interne 11 est insérée avec frottement dans ledit col 21 du récipient 20.

Selon l'invention, la surface supérieure ou "plateau" de la partie externe 12 du bouchon 10 comporte un revêtement 18 réalisé par un procédé de traitement qui utilise la technologie de polymérisation assistée par plasma à pression atmosphérique. Ce procédé utilise une "flamme" de plasma créée à pression atmosphérique, dans laquelle un monomère est injecté, et qui vient se polymériser sur le substrat ainsi traité.

Une machine de traitement plasma typique pour mettre en oeuvre la présente invention est avantageusement de taille adaptée pour accueillir les plaques entières de bouchons telles qu'elles sortent du moule où le caoutchouc est mis en forme et vulcanisé.

Le procédé de la présente invention permet un passage direct de l'opération de moulage à l'opération de traitement par plasma atmosphérique, sans qu'il n'y ait de besoin d'un traitement intermédiaire. En particulier, la présente invention n'implique aucun lavage, ni préparation de surface.

Le procédé de l'invention, selon un mode de réalisation avantageux de celle-ci, comporte deux étapes:
- une phase d'activation de surface assistée par plasma atmosphérique; et
- une phase de dépôt assisté par plasma atmosphérique.

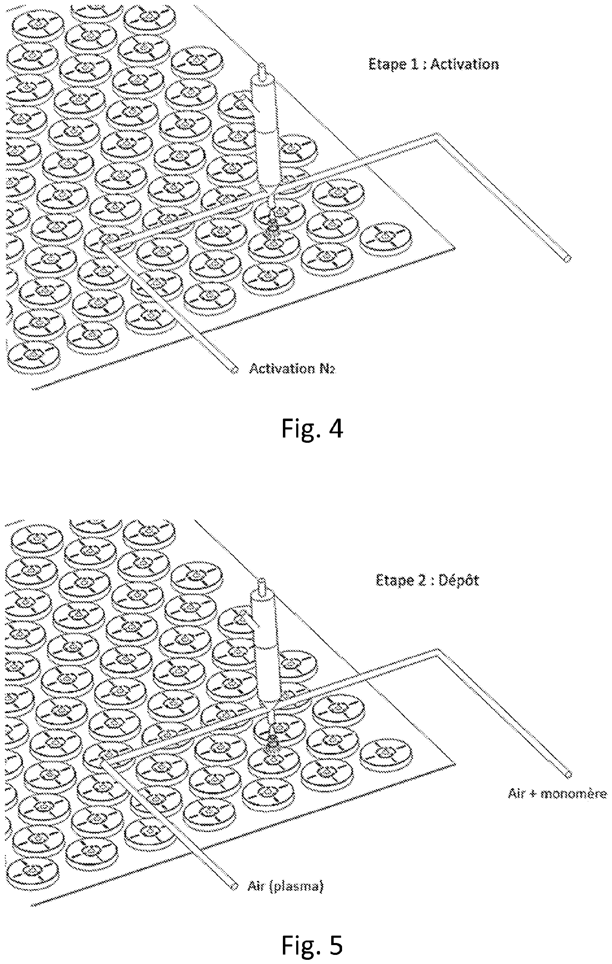

Les figures 4 et 5 illustrent un mode de réalisation avantageux de la présente invention, qui n'est pas limitatif.

### Phase d'activation de surface:

Afin de favoriser une adhésion future efficace du dépôt, une activation de surface est de préférence réalisée en passant la flamme de plasma au-dessus des pièces à traiter, en particulier la plaque de bouchons non découpés issue du moule. La "toile" qui relie les bouchons entre eux permet de ne traiter que la face "plateau" des bouchons, et de masquer la face revêtue de film barrière anti adhérent situé sur la partie "jupe" des bouchons, qui n'a pas besoin d'être traitée par le procédé plasma.

Pour activer la surface, différents gaz peuvent être utilisés pour générer la flamme de plasma : air, argon, azote, hélium, oxygène, etc.; les plus efficaces étant l'air ou l'azote, de préférence l'azote, comme illustré sur la figure 4.

La vitesse de passage de la flamme de plasma au-dessus du substrat peut varier de 10 à 1000 mm/s, avantageusement de 100 à 500 mm/s, de préférence environ 300 mm/s, permettant une productivité élevée tout en assurant un temps de traitement d'activation suffisant du substrat.

Le nombre de passages au-dessus du substrat pour réaliser l'activation peut être de un à cinq cycles, avantageusement un seul cycle afin de limiter les couts afférents.

Le débit de gaz d'activation peut varier de 5 à 200 l/min, avantageusement de 10 à 100 l/min, de préférence environ 60 l/min, afin d'obtenir une activation efficace sans avoir une consommation trop importante de gaz plasmagène.

La distance entre la buse où est généré le plasma et le substrat peut être comprise entre 1 et 50 mm, avantageusement entre 5 et 35 mm, de préférence environ 20 mm.

### Phase de dépôt assisté par plasma atmosphérique:

Pour obtenir une polymérisation efficace du monomère avec ce procédé, différents gaz peuvent être utilisés pour générer la flamme de plasma : air, argon, azote, hélium, oxygène, etc.; les plus efficaces étant l'air ou l'azote, de préférence l'air, comme illustré sur la figure 5.

La vitesse de passage de la flamme de plasma au-dessus du substrat peut varier de 10 à 1000 mm/s, avantageusement de 100 à 500 mm/s, de préférence environ 300 mm/s, permettant une productivité élevée tout en assurant un temps de traitement d'activation suffisant du substrat.

Le nombre de passages au-dessus du substrat pour réaliser le dépôt peut être de un à cinq cycles, avantageusement de un à trois cycles, de préférence deux cycles, afin d'assurer un traitement complet de toute la zone à traiter de la plaque de bouchons, en restant dans des temps de traitement compatibles avec les exigences industrielles.

Le débit de gaz plasmagène peut varier de 5 à 200 l/min, avantageusement de 10 à 100 l/min, de préférence environ 60 l/min, afin d'obtenir une activation efficace sans avoir une consommation trop importante de gaz.

La distance entre la buse où est généré le plasma et le substrat peut être comprise entre 1 et 50 mm, avantageusement entre 5 et 35 mm, de préférence entre 10 et 25 mm.

Les monomères utilisables pour réaliser le dépôt sont multiples. On peut notamment citer les hydrocarbures saturés ou non, contenant ou non des groupements polaires (méthane, éthane, éthylène, acétylène, benzène, styrène, acide acrylique, pyridine, vinylpyridine, allylamine, etc.), les composés fluorocarbonés (tétrafluorométhane, tétrafluoroéthylène, hexafluoroacétone, etc.), les composés à base de silicium (silanes, siloxanes, silazanes, etc.).

Dans un mode de réalisation particulier de la présente invention, le développement s'est concentré sur les composés à base de silicium, de préférence l'hexaméthydisiloxane ou l'hexaméthydisilane, ce dernier ayant démontré un compromis de propriétés optimal lors d'essais de traitement sur un caoutchouc butyle.

La technologie de la présente invention a de nombreux avantages :
- elle n'utilise que des gaz inertes, en quantité raisonnable, et une faible quantité de monomère (siloxanique en général), donc ne présentant aucun risque envers l'environnement;
- elle crée un dépôt polymérisé ne contenant aucun composé toxique, ni solvant résiduel;
- elle permet de traiter sélectivement la face supérieure ou plateau 18 du bouchon en caoutchouc, sans interférer sur la partie inférieure déjà avantageusement revêtue d'un film de polymère fluoré;
- elle permet de créer une surface 18 anti-adhérente et glissante sur le plateau du bouchon, permettant l'absence de collage des pièces entre elles, et un glissement aisé des pièces sur les lignes de conditionnement;
- elle permet de traiter des surfaces de caoutchouc très importantes en quelques secondes, donc une capacité de production intéressante;
- elle ne nécessite pas d'enceinte de travail sous vide, ce qui permet de limiter les coûts de machine, et garantit une excellente productivité, car on supprime les temps de mise sous vide de l'enceinte de travail par rapport à un procédé de plasma sous vide.

Les bouchons 10 obtenus avec le procédé préférentiel de l'invention combinent donc les avantages suivants :
- élasticité du caoutchouc permettant une obturation performante du col de récipient;
- protection envers les gaz (oxygène, humidité) par la faible perméabilité du caoutchouc utilisé;
- absence ou très faible niveau de migration de substances du caoutchouc vers le médicament en raison de l'effet barrière du polymère fluoré;
- absence d'huile de silicone sur le bouchon;
- absence de collage des pièces sur la partie supérieure ou plateau en raison du traitement polymérisé appliqué par la technologie de plasma atmosphérique.

La présente invention, qui dans son mode de réalisation préféré combine la réalisation d'un bouchon avec un film barrière sur la partie inférieure 11 en contact avec le médicament et le revêtement par plasma atmosphérique du plateau supérieur du bouchon, permet donc d'optimiser les performances du bouchon, aussi bien en phase de fabrication qu'en phase d'utilisation du bouchon.

## Revendications

1. Procédé de traitement d'un élément de conditionnement (10) en élastomère, notamment d'un bouchon destiné à un usage médical ou pharmaceutique, ledit élément de conditionnement (10) comportant une partie inférieure (11), destinée à pénétrer dans un col (21) d'un récipient (20), et une partie supérieure (12), destinée à coopérer de manière étanche avec une surface supérieure (22) dudit col (21) du récipient (20), la surface supérieure de ladite partie supérieure (12) étant traitée par un procédé de polymérisation assistée par plasma à pression atmosphérique, au moyen d'une flamme de plasma créée à pression atmosphérique, dans laquelle un monomère est injecté, ledit monomère venant se polymériser sur ladite surface supérieure pour former un revêtement (18), ledit procédé comportant une phase d'activation de surface assistée par plasma atmosphérique et une phase de dépôt assisté par plasma atmosphérique, **caractérisé en ce que** ladite phase d'activation de surface assistée par plasma atmosphérique comprend de passer ladite flamme de plasma au-dessus de ladite surface supérieure, avec les paramètres suivants:
- gaz utilisés pour générer la flamme de plasma : air, argon, azote, hélium, oxygène; avantageusement air ou azote; de préférence azote;
- vitesse de passage de la flamme de plasma au-dessus de ladite surface supérieure : 10 à 1000 mm/s, avantageusement 100 à 500 mm/s, de préférence 300 mm/s;
- nombre de passages au-dessus de ladite surface supérieure pour réaliser l'activation: un à cinq cycles, avantageusement un seul cycle;
- débit de gaz d'activation: 5 à 200 l/min, avantageusement 10 à 100 l/min, de préférence 60 l/min;
- distance entre la buse où est généré le plasma et de ladite surface supérieure : entre 1 et 50 mm, avantageusement entre 5 et 35 mm, de préférence 20 mm.

2. Procédé de traitement d'un élément de conditionnement (10) en élastomère, notamment d'un bouchon destiné à un usage médical ou pharmaceutique, ledit élément de conditionnement (10) comportant une partie inférieure (11), destinée à pénétrer dans un col (21) d'un récipient (20), et une partie supérieure (12), destinée à coopérer de manière étanche avec une surface supérieure (22) dudit col (21) du récipient (20), la surface supérieure de ladite partie supérieure (12) étant traitée par un procédé de polymérisation assistée par plasma à pression atmosphérique, au moyen d'une flamme de plasma créée à pression atmosphérique, dans laquelle un monomère est injecté, ledit monomère venant se polymériser sur ladite surface supérieure pour former un revêtement (18), ledit procédé comportant une phase d'activation de surface assistée par plasma atmosphérique et une phase de dépôt assisté par plasma atmosphérique, **caractérisé en ce que** ladite phase de dépôt assisté par plasma atmosphérique comprend de passer ladite flamme de plasma au-dessus de ladite surface supérieure, avec les paramètres suivants:
- gaz utilisés pour générer la flamme de plasma : air, argon, azote, hélium, oxygène; avantageusement air ou azote; de préférence air;
- vitesse de passage de la flamme de plasma au-dessus de ladite surface supérieure : 10 à 1000 mm/s, avantageusement 100 à 500 mm/s, de préférence 300 mm/s;
- nombre de passages au-dessus de ladite surface supérieure pour réaliser l'activation: un à cinq cycles, avantageusement un à trois cycles, de préférences deux cycles;
- débit de gaz d'activation: 5 à 200 l/min, avantageusement 10 à 100 l/min, de préférence 60 l/min;
- distance entre la buse où est généré le plasma et de ladite surface supérieure : entre 1 et 50 mm, avantageusement entre 5 et 35 mm, de préférence entre 10 et 25 mm.

3. Procédé selon la revendication 1, dans lequel ladite phase de dépôt assisté par plasma atmosphérique comprend de passer ladite flamme de plasma au-dessus de ladite surface supérieure, avec les paramètres suivants:
- gaz utilisés pour générer la flamme de plasma : air, argon, azote, hélium, oxygène ; avantageusement air ou azote; de préférence air;
- vitesse de passage de la flamme de plasma au-dessus de ladite surface supérieure : 10 à 1000 mm/s, avantageusement 100 à 500 mm/s, de préférence 300 mm/s;
- nombre de passages au-dessus de ladite surface supérieure pour réaliser l'activation: un à cinq cycles, avantageusement un à trois cycles, de préférences deux cycles;
- débit de gaz d'activation: 5 à 200 l/min, avantageusement 10 à 100 l/min, de préférence 60 l/min;
- distance entre la buse où est généré le plasma et de ladite surface supérieure : entre 1 et 50 mm, avantageusement entre 5 et 35 mm, de préférence entre 10 et 25 mm.

4. Procédé selon l'une quelconque des revendications précédentes, dans lequel ledit monomère est choisi parmi les hydrocarbures saturés ou non, contenant ou non des groupements polaires, tels que le méthane, éthane, éthylène, acétylène, benzène, styrène, acide acrylique, pyridine, vinylpyridine, allylamine, les composés fluorocarbonés, tels que le tétrafluorométhane, tétrafluoroéthylène, hexafluoroacétone, les composés à base de silicium tels que les silanes, siloxanes, silazanes.

5. Procédé selon l'une quelconque des revendications précédentes, dans lequel ladite partie interne (11) dudit élément de conditionnement (10) comporte un revêtement (17), tel qu'un film de type PTFE (polytétrafluoroéthylène), ETFE (éthylène tétrafluoroéthylène), ECTFE (éthylène chlorotrifluoroéthylène), FEP (éthylène propylène fluoré).

## Patentansprüche

1. Verfahren zur Behandlung eines Verpackungselements (10) aus Elastomer, insbesondere eines Pfropfens zur medizinischen oder pharmazeutischen Verwendung, wobei das Verpackungselement (10) einen unteren Teil (11), der dazu gedacht ist, in einen Kragen (21) eines Behälters (20) einzudringen, und einen oberen Teil (12), der dazu gedacht ist, dichtend mit einer oberen Oberfläche (22) des Kragens (21) des Behälters (20) zusammenzuwirken, umfasst, wobei die obere Oberfläche des oberen Teils (12) durch ein Polymerisationsverfahren in Gegenwart von Plasma unter atmosphärischem Druck mittels einer Plasmaflamme behandelt wird, die unter atmosphärischem Druck erzeugt wird, in die ein Monomer eingespritzt wird, wobei das Monomer auf der oberen Oberfläche polymerisiert, um einen Überzug (18) zu bilden, wobei das Verfahren eine Oberflächenaktivierungsphase in Gegenwart von atmosphärischem Plasma und eine Niederschlagsphase in Gegenwart von atmosphärischem Plasma umfasst, **dadurch gekennzeichnet, dass** die Oberflächenaktivierungsphase in Gegenwart von atmosphärischem Plasma umfasst, dass die Plasmaflamme oberhalb der oberen Oberfläche mit den folgenden Parametern vorbeigeführt wird:
- zur Erzeugung der Plasmaflamme verwendete Gase: Luft, Argon, Stickstoff, Helium, Sauerstoff; vorteilhafterweise Luft oder Stickstoff; vorzugsweise Stickstoff;
- Geschwindigkeit des Vorbeiführens der Plasmaflamme oberhalb der oberen Oberfläche: 10 bis 1000 mm/s, vorteilhafterweise 100 bis 500 mm/s, vorzugsweise 300 mm/s;
- Anzahl der Vorbeiführungen oberhalb der oberen Oberfläche zum Umsetzen der Aktivierung: ein bis fünf Zyklen, vorteilhafterweise ein einziger Zyklus;
- Ausstoß des Aktivierungsgases: 5 bis 200 l/min, vorteilhafterweise 10 bis 100 l/min, vorzugsweise 60 l/min;
- Entfernung zwischen der Spritzdüse, wo das Plasma erzeugt wird, und der oberen Oberfläche: zwischen 1 und 50 mm, vorteilhafterweise zwischen 5 und 35 mm, vorzugsweise 20 mm.

2. Verfahren zur Behandlung eines Verpackungselements (10) aus Elastomer, insbesondere eines Pfropfens zur medizinischen oder pharmazeutischen Verwendung, wobei das Verpackungselement (10) einen unteren Teil (11), der dazu gedacht ist, in einen Kragen (21) eines Behälters (20) einzudringen, und einen oberen Teil (12), der dazu gedacht ist, dichtend mit einer oberen Oberfläche (22) des Kragens (21) des Behälters (20) zusammenzuwirken, umfasst, wobei die obere Oberfläche des oberen Teils (12) durch ein Polymerisationsverfahren in Gegenwart von Plasma unter atmosphärischem Druck mittels einer Plasmaflamme behandelt wird, die unter atmosphärischem Druck erzeugt wird, in die ein Monomer eingespritzt wird, wobei das Monomer auf der oberen Oberfläche polymerisiert, um einen Überzug (18) zu bilden, wobei das Verfahren eine Oberflächenaktivierungsphase in Gegenwart von atmosphärischem Plasma und eine Niederschlagsphase in Gegenwart von atmosphärischem Plasma umfasst, **dadurch gekennzeichnet, dass** die Niederschlagsphase in Gegenwart von atmosphärischem Plasma das Vorbeiführen der Plasmaflamme oberhalb der oberen Oberfläche mit den folgenden Parametern umfasst:
- zur Erzeugung der Plasmaflamme verwendete Gase: Luft, Argon, Stickstoff, Helium, Sauerstoff; vorteilhafterweise Luft oder Stickstoff; vorzugsweise Luft;
- Geschwindigkeit des Vorbeiführens der Plasmaflamme oberhalb der oberen Oberfläche: 10 bis 1000 mm/s, vorteilhafterweise 100 bis 500 mm/s, vorzugsweise 300 mm/s;
- Anzahl der Vorbeiführungen oberhalb der oberen Oberfläche zum Umsetzen der Aktivierung: ein bis fünf Zyklen, vorteilhafterweise ein bis drei Zyklen, vorzugsweise zwei Zyklen;
- Ausstoß des Aktivierungsgases: 5 bis 200 l/min, vorteilhafterweise 10 bis 100 l/min, vorzugsweise 60 l/min;
- Entfernung zwischen der Spritzdüse, wo das Plasma erzeugt wird, und der oberen Oberfläche: zwischen 1 und 50 mm, vorteilhafterweise zwischen 5 und 35 mm, vorzugsweise zwischen 10 und 25 mm.

3. Verfahren nach Anspruch 1, wobei die Niederschlagsphase in Gegenwart von atmosphärischem Plasma das Vorbeiführen der Plasmaflamme oberhalb der oberen Oberfläche mit den folgenden Parametern umfasst:
- zur Erzeugung der Plasmaflamme verwendete Gase: Luft, Argon, Stickstoff, Helium, Sauerstoff; vorteilhafterweise Luft oder Stickstoff; vorzugsweise Luft;
- Geschwindigkeit des Vorbeiführens der Plasmaflamme oberhalb der oberen Oberfläche: 10 bis 1000 mm/s, vorteilhafterweise 100 bis 500 mm/s, vorzugsweise 300 mm/s;
- Anzahl der Vorbeiführungen oberhalb der oberen Oberfläche zum Umsetzen der Aktivierung: ein bis fünf Zyklen, vorteilhafterweise ein bis drei Zyklen, vorzugsweise zwei Zyklen;
- Ausstoß des Aktivierungsgases: 5 bis 200 l/min, vorteilhafterweise 10 bis 100 l/min, vorzugsweise 60 l/min;
- Entfernung zwischen der Spritzdüse, wo das Plasma erzeugt wird, und der oberen Oberfläche: zwischen 1 und 50 mm, vorteilhafterweise zwischen 5 und 35 mm, vorzugsweise 10 und 25 mm.

4. Verfahren nach einem der vorhergehenden Ansprüche, wobei das Monomer ausgewählt ist aus gesättigten oder nicht gesättigten Kohlenwasserstoffen, die polare Gruppierungen enthalten oder nicht, wie Methan, Ethan, Ethylen, Acetylen, Benzol, Styrol, Acrylsäure, Pyridin, Vinylpyridin, Allylamin, Fluorkohlenstoffverbindungen, wie Tetrafluormethan, Tetrafluorethylen, Hexafluoraceton, Verbindungen auf Basis von Silizium, wie Silane, Siloxane, Silazane.

5. Verfahren nach einem der vorhergehenden Ansprüche, wobei der interne Teil (11) des Verpackungselements (10) einen Überzug (17), wie einen Film vom Typ PTFE (Polytetrafluorethylen), ETFE (Ethylentetrafluorethylen), ECTFE (Ethylenchlortrifluorethylen, FEP (fluoriertes Ethylenpropylen) umfasst.

## Claims

1. A method of treating an elastomer packaging element (10), in particular a stopper for medical or pharmaceutical use, said packaging element (10) having a bottom portion (11) that is to penetrate into a neck (21) of a container (20) and a top portion (12) that is to co-operate in sealed manner with a top surface (22) of said neck (21) of the container (20), the top surface of said top portion (12) being treated by a plasma-assisted polymerization method at atmospheric pressure using a plasma flame created at atmospheric pressure and into which a monomer is injected, said monomer polymerizing on said top surface in order to form a coating (18), said method comprising a stage of atmospheric plasma-assisted surface activation and a stage of atmospheric plasma-assisted deposition, the method being **characterized in that** said atmospheric plasma-assisted surface activation stage comprises passing said plasma flame over said top surface, with the following parameters:
- gas used for generating the plasma flame: air, argon, nitrogen, helium, oxygen, advantageously air or nitrogen; preferably nitrogen;
- speed at which the plasma flame passes over said top surface: 10 mm/s to 1000 mm/s, and advantageously 100 mm/s to 500 mm/s, preferably 300 mm/s;
- number of passes over said top surface to perform activation: one cycle to five cycles, advantageously a single cycle;
- activation gas flow rate: 5 L/min to 200 L/min, and advantageously 10 L/min to 100 L/min, preferably 60 L/min;
- distance between the nozzle where the plasma is generated and said top surface: in the range 1 mm to 50 mm, and advantageously in the range 5 mm to 35 mm, preferably 20 mm.

2. A method of treating an elastomer packaging element (10), in particular a stopper for medical or pharmaceutical use, said packaging element (10) having a bottom portion (11) that is to penetrate into a neck (21) of a container (20) and a top portion (12) that is to co-operate in sealed manner with a top surface (22) of said neck (21) of the container (20), the top surface of said top portion (12) being treated by a plasma-assisted polymerization method at atmospheric pressure using a plasma flame created at atmospheric pressure and into which a monomer is injected, said monomer polymerizing on said top surface in order to form a coating (18), said method comprising a stage of atmospheric plasma-assisted surface activation and a stage of atmospheric plasma-assisted deposition, the method being **characterized in that** said atmospheric plasma-assisted deposition stage comprises passing said plasma flame over said top surface with the following parameters:
- gas used for generating the plasma flame: air, argon, nitrogen, helium, oxygen, etc.; advantageously air or nitrogen; preferably air;
- speed at which the plasma flame is passed over said top surface: 10 mm/s to 1000 mm/s, and advantageously 100 mm/s to 500 mm/s, preferably 300 mm/s;
- number of passes over said top surface to perform activation: one cycle to five cycles, and advantageously one cycle to three cycles, preferably two cycles;
- activation gas flow rate: 5 L/min to 200 L/min, and advantageously 10 L/min to 100 L/min, preferably 60 L/min;
- distance between the nozzle where the plasma is generated and said top surface: in the range 1 mm to 50 mm, and advantageously in the range 5 mm to 35 mm, preferably in the range 10 mm to 25 mm.

3. A method according to claim 1, wherein said atmospheric plasma-assisted deposition stage comprises passing said plasma flame over said top surface with the following parameters:
- gas used for generating the plasma flame: air, argon, nitrogen, helium, oxygen, advantageously air or nitrogen; preferably air;
- speed at which the plasma flame is passed over said top surface: 10 mm/s to 1000 mm/s, and advantageously 100 mm/s to 500 mm/s, preferably 300 mm/s;
- number of passes over said top surface to perform activation: one cycle to five cycles, and advantageously one cycle to three cycles, preferably two cycles;
- activation gas flow rate: 5 L/min to 200 L/min, and advantageously 10 L/min to 100 L/min, preferably 60 L/min;
- distance between the nozzle where the plasma is generated and said top surface: in the range 1 mm to 50 mm, and advantageously in the range 5 mm to 35 mm, preferably in the range 10 mm to 25 mm.

4. A method according to any preceding claim, wherein said monomer is selected from optionally-saturated hydrocarbons optionally containing polar groups such as methane, ethane, ethylene, acetylene, benzene, styrene, acrylic acid, pyridine, vinylpyridine, and allylamine, fluorocarbon compounds such as tetrafluoromethane, tetrafluoroethylene, and hexafluoroacetone, and silicon-based compounds such as silanes, siloxanes, and silazanes.

5. A method according to any preceding claim, wherein said internal portion (11) of said packaging (10) has a coating (17) such as a film of PTFE (polytetrafluoroethylene), ETFE (ethylene tetrafluoroethylene), ECTFE (ethylene chlorotrifluoroethylene), or FEP (fluorinated ethylene propylene) type.
